(19) Europäisches Patentamt
European Patent Office
Office européen des brevets

(11) **EP 1 058 961 B1**

(12) **EUROPÄISCHE PATENTSCHRIFT**

(45) Veröffentlichungstag und Bekanntmachung des Hinweises auf die Patenterteilung:
**14.11.2001 Patentblatt 2001/46**

(51) Int Cl.⁷: **H02M 3/156**

(21) Anmeldenummer: **98966562.5**

(86) Internationale Anmeldenummer:
**PCT/DE98/03741**

(22) Anmeldetag: **21.12.1998**

(87) Internationale Veröffentlichungsnummer:
**WO 99/45630 (10.09.1999 Gazette 1999/36)**

(54) **SCHALTREGLER**

SWITCHING CONTROLLER

REGULATEUR DE COMMUTATION

(84) Benannte Vertragsstaaten:
**DE FR GB IT**

(30) Priorität: **05.03.1998 DE 19809385**

(43) Veröffentlichungstag der Anmeldung:
**13.12.2000 Patentblatt 2000/50**

(73) Patentinhaber: **ROBERT BOSCH GMBH**
**70442 Stuttgart (DE)**

(72) Erfinder: **OHMS, Franz**
**D-74420 Oberrot (DE)**

(56) Entgegenhaltungen:
**EP-B- 0 355 333        WO-A-97/34363**
**US-A- 4 885 674**

## Beschreibung

Stand der Technik

Die Erfindung geht aus von einem Schaltregler, in dessen Regelkreis ein Fehlersignalverstärker vorgesehen ist, der im wesentlichen P-Verhalten aufweist und der auf einen Pulsdauer- oder Pulsfrequenzmodulator für das SchaltreglerStellglied einwirkt. Ein solcher Schaltregler ist bekannt aus EP 0 355 333 B1.

Aus der WO 97/34363 ist ein Schaltregler bekannt, der neben der üblichen Regelschleife für das Fehlersignal am Ausgang des Schaltreglers noch eine weitere Regelschleife besitzt, mit der eine Korrekturgröße, die eine Funktion der Laständerung ist, erfasst wird. Diese Korrekturgröße wird dem Fehlersignal additiv überlagert, um Spannungsschwankungen bei pulsformigen Laständerungen am Ausgang des Schaltreglers zu reduzieren.

Aus der US-A-4,885,674 ist ein ähnlicher Schaltregler mit zwei solcher Regelschleifen bekannt.

Beim Schaltregler gemäß der EP 0 355 333 B1 werden Störsignale auf der Eingangsspannung in ihrer Auswirkung auf die Ausgangsspannung des Schaltreglers optimal unterdruckt, ohne daß eine Beeinträchtigung der Regelgeschwindigkeit, z.B. bei Lastsprüngen, auftritt. Um bei Lastsprüngen am Ausgang, z.B. beim TDMA-Betrieb eines Wanderfeldröhrenverstärkers in einem Satelliten, große Spannungseinbruche zu vermeiden, muß der Spannungsregelkreis entsprechend dimensioniert sein (Hoher ?-Anteil im Fehlersignalverstarker). Dies geht wiederum nur bei entsprechend großer Ausgangskapazität, wenn keine Regelstabilitätsprobleme auftreten sollen.

Vorteile der Erfindung

Mit den Maßnahmen gemäß den Merkmalen des Anspruchs 1 gelingt es den Regelkreis mit niedrigem Proportionalanteil zu dimensionieren. Die Schaltreglerausgangskapazitäten können, ohne daß Regelstabilitätsprobleme auftreten, verkleinert werden. Dies führt zu einer verkleinerten Bauweise von Schaltreglern in Hochspannungsteilen, wo ein beträchtlicher Aufwand für Glättungskondensatoren notwendig ist.

Die Erfindung beruht auf der Erkenntnis, daß durch eine sogenannte Vorwärtssteuerung der Regelkreis mit einem niedrigen Proportionalanteil dimensioniert werden kann; d.h. der Lastsprung wird unter weitgehender Umgehung des Fehlersignalsverstärkers direkt erfaßt und dem Pulsdauer- oder Pulsfrequenzmodulator zugeführt, ohne daß der eigentliche Regelkreis reagieren muß. Durch diese Vorsteuerung ergeben sich bei Lastsprüngen weniger Regelverzögerungen, ohne daß Stabilitätsprobleme auftreten.

Wenn lediglich der Wechselanteil des Laststromes für die Vorsteuerung erfaßt wird, klingt die Vorsteuerung mit einer Zeitkonstanten ab, die so gewählt werden kann, daß der Fehlersignalverstärker die abklingende vorsteuerung mühelos ausgleichen kann.

Zeichnungen

Anhand der Zeichnungen werden Ausführungsbeispiele der Erfindung näher erläutert. Es zeigen:

> Figur 1 ein Prinzipschaltbild eines Schaltreglers nach der Erfindung,
> Figur 2 eine Auswerteeinrichtung zur Erfassung eines Lastsprunges, Figur 3 die Erfassung des Kollektorstromes eines Wanderfeldröhrenverstärkers.

Beschreibung von Ausführungsbeispielen

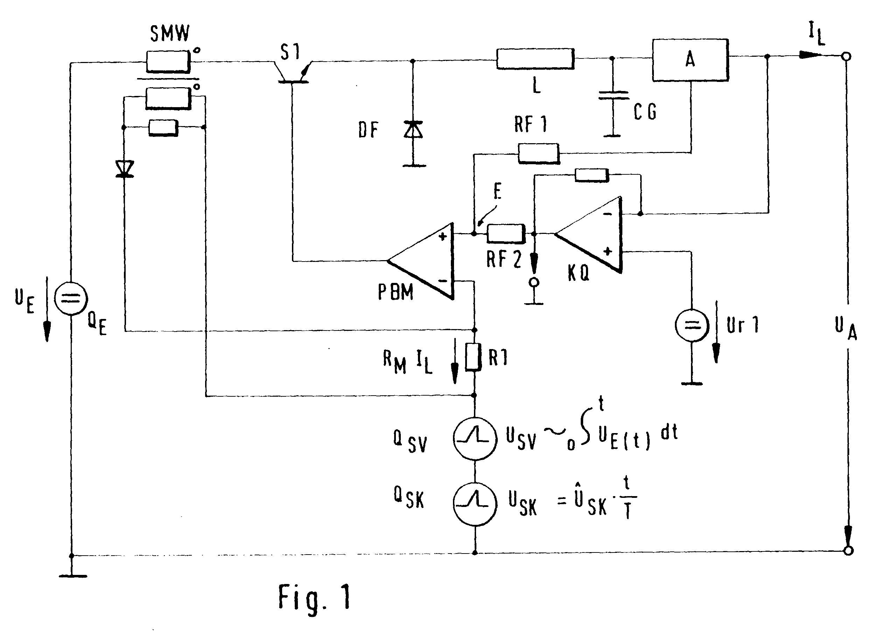

Der in Figur 1 dargestellte Schaltregler ist als Buck-(Abwärts-)Regler ausgebildet. Er weist eine Eingangsgleichspannungsquelle $Q_E$ mit einer Klemmenspannung $U_E$ auf. Zwischen dem Pluspol der Eingangsgleichspannungsquelle $Q_E$ und dem Pluspol des Schaltreglerausganges mit der Ausgangsspannung $U_A$ liegt die Serienschaltung des Schaltreglerstellgliedes S1 in Form eines Schalttransistors und der Schalreglerinduktivität L. Die Freilaufdiode des Schaltreglers ist mit DF bezeichnet und der ausgangsseitige Glättungskondensator mit CG. Die Ausgangsspannung $U_A$ wird einem Fehlersignalverstärker KO zugeführt, der diese mit einer Referenzspannung Ur1 vergleicht. Übersteigt die Ausgangsspannung $U_A$ die Referenzgleichspannung Ur1, so wird an den Pulsdauermodulator PBM (nichtinvertierender Eingang), dessen Ausgangssignal das Tastverhältnis (Einschalt- zu Ausschaltdauer) des Stellgliedes S1 bestimmt, ein Steuersignal abgegeben. An den invertierenden Eingang des Pulsbreitenmodulators PBM und gemeinsamer Masse ist die Serienschaltung aus einem Widerstand R1 und zwei Signalquellen $Q_{SV}$, $Q_{SK}$ angeschlossen, die sägezahnförmige Signale $U_{SV}$ und $U_{SK}$ liefern. Am Widerstand R1 fällt eine zum Eingangsstrom des Schaltreglers proportionale Spannung ab. Dies wird dadurch erreicht, daß der Widerstand R1 von dem gleichgerichteten Sekundärstrom eines Stromwandlers SMW durchflossen wird, dessen Pimärwicklung sich am Schaltregler-Eingangsstromkreis zwischen Eingangsgleichspannungsquelle $Q_E$ und dem Stellglied S1 befindet. Die Signalquelle $Q_{SK}$ führt eine Sägezahnspannung

$$U_{SK(t)} = \hat{U}_{SK}\, t/T$$

wobei t die Zeit, T die Periodendauer der Sägezahnwiederholfrequenz und $\hat{U}_{SK}$ die Maximalamplitude der Sägezahnspannung angibt. Die Maximalamplitude $\hat{U}_{SK}$ der Sägezahnspannung wird konstant gehalten. RM bezeichnet den Widerstandswert des Widerstandes R1 zur Erfassung des Stromes durch das Stellglied, bzw. in dem in Figur 1 gezeigten Fall der Stromerfassung mit einem Stromwandler den mit dem Kehrwert des Übersetzungsverhältnisses des Stromwandlers SMW multiplizierten Widerstandswert. Es gilt dann RM = $\frac{RI}{\ddot{u}I}$ wobei ü das Übersetzungsverhältnis des Stromwandlers SMW angibt. Um die Stabilitätsbedingungen einhalten zu können, ist also eine bestimmte Minimum-Sägezahnamplitude nötig, die allein durch die Regelung in Abhängigkeit der Ausgangsspannung $U_A$ nicht bereitgestellt werden kann. Die Wirkung der Stromsteueramplitude läßt sich dadurch verändern, indem man die Sägezahnamplitude durch die Eingangsspannung moduliert. Dazu ist eine weitere Signalquelle $Q_{SV}$ vorgesehen, die eine Sägezahnspannung

$$U_{SV(t)} = \frac{1}{RC} \int_0^t U_{E(t)} dt$$

führt. Diese Sägezahnspannung $U_{SV(t)}$ ist somit proportional zur aufintegrierten Eingangsspannung $U_{E(t)}$. Die Zeitabhängigkeit der Eingangsspannung $U_E$ des Schaltreglers rührt im wesentlichen von überlagerten Wechselanteilen, wie z.B. bei einem Schaltnetzteil eine 100 Hz Brummspannung. Eine optimale Unterdrückung dieser Störung liegt vor, wenn der arithmetische Mittelwert des Stromes $I_O$ durch die Induktivität L konstant ist. Zur optimalen Unterdrückung von Eingangsspannungsänderungen und Einhaltung der Stabilitätsforderung müssen Bedingungen eingehalten werden, die im einzelnen aus der EP 0 355 333 B1 hervorgehen.

Erfindungsgemäß wird nun über eine Auswerteschaltung A, die im gezeigten Ausführungsbeispiel zwischen dem. ausgangsseitigen Glättungskondensator CG und einer Schaltregler-Ausgangsklemme angeordnet ist, das Lastsprungverhalten des Schaltreglers erfaßt, insbesondere der Wechselanteil des Laststromes $I_L$, in geeigneter Weise verstärkt und über eine Einkoppeleinrichtung E zwischen dem im wesentlichen P-Verhalten aufweisenden Fehlersignalverstärker KO und dem Pulsdauermodulator PBM zugeführt. Durch die Zuführung des lastsprungabhängigen Signals direkt an den Eingang des Pulsbreitenmodulators PBM ändert sich die Reglerstabilität, insbesondere hinsichtlich Phasenreserve und Betragsrand nicht. Die Einkoppeleinrichtung E kann, wie in Figur 1 dargestellt, aus einem einfachen Addierknoten oder aus einer Addierschaltung bestehen, wo das Ausgangssignal des Fehlersignalverstärkers KO mit dem von der Auswerteschaltung A erfaßten Signal verknüpft wird. Die Zuführung der beiden Verknüpfungssignale zum Addierknoten erfolgt vorzugsweise über gleich große Widerstände RF1 und RF2.

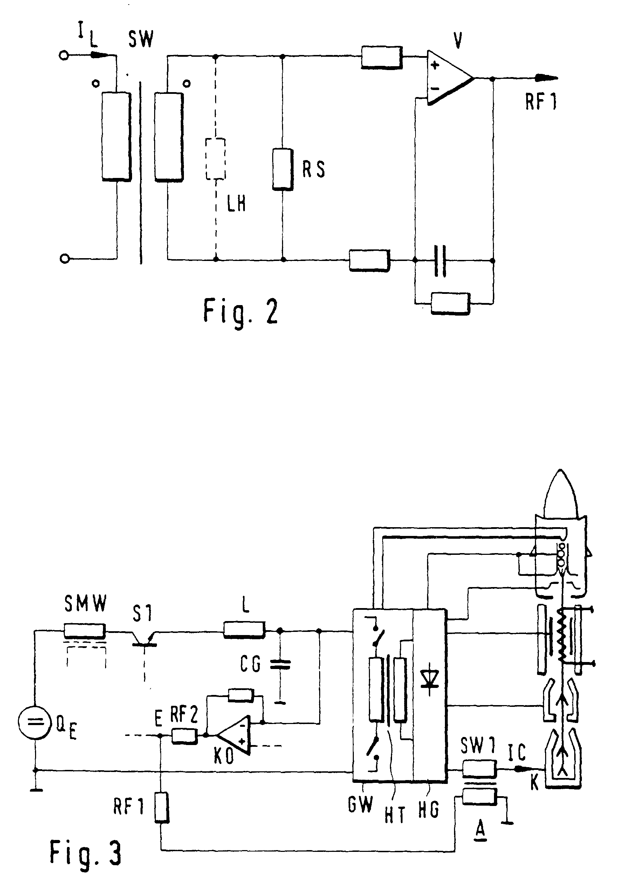

Wie Figur 2 zeigt, erfolgt die Erfassung des Wechselanteils des Laststromes $I_L$ durch die Auswerteschaltung A vorzugsweise über einen Strommeßwandl. er SW und einen nachgeschalteten Verstärker V. Liegt keine Laststromänderung, d.h. keine Änderung des Stromes $I_L$, z.B. bei einem Lastsprung, vor, so liegt am Widerstand RF1 kein Signal an. Wie aus Figur 1 hervorgeht, wirkt sich bei gleich großen Widerständen RF1 und RF2 das Ausgangssignal des Fehlersignaiverstärkers KO am Pulsdauermodulator PBM mit der halben Amplitude 1/2 $U_{K0}$ aus. Wird nun die Regelverstärkung um den Faktor zwei erhöht, so erkennt man, daß die zusätzliche Vorsteuerung über das durch die Auswerteschaltung A erfaßte Signal keinen Einfluß auf den normalen Regelkreis ausübt; d.h. die Reglerstabilität wird nicht verändert. Liegt nun eine Laständerung, d.h insbesondere eine Modulation des Laststromes vor, wird der Pulsdauermodulator PBM in geeigneter Weise vorgesteuert, ohne daß der eigentliche Regelkreis reagieren muß.

Da vorzugsweise nur der Wechselanteil des Laststromes $I_L$ erfaßt wird, klingt die Vorsteuerung mit der Zeitkonstanten TAU = LH/RS ab, wobei LH die Hauptinduktivität des Strommeßwandlers SW darstellt und RS den in Figur 2 dargestellten Querwiderstand. Die Zeitkonstante TAU wird insbesondere so groß gewählt, daß der Fehlersignalverstärker KO die abklingende Reglerabweichung der Vorsteuerung mühelos ausgleichen kann.

Anstelle eines Pulsdauermodulators kann auch ein Pulsfrequenzmodulator für den Schaltregler vorgesehen sein. Außerdem kann die Erfindung bei beliebigen Schaltreglertypen, z.B. einem Aufwärtssteller, einem Flußwandler, Sperrwandler usw. angewendet werden. Die Erfindung eignet sich insbesondere für Hochspannungsteile für Wanderfeldröhrenverstärker in Bodenstationen oder Satelliten, wo der Glättungs- bzw. Siebaufwand gering gehalten werden soll. Der erfaßte Laststrom ist dann insbesondere der Kollektorstrom der Wanderfeldröhre, der mittels dem Strommeßwandler SW auf die Niederspannungsseite des Schaltreglers transformiert wird.

Je nach Schaltreglertyp und den Störeinflüssen, z.B. Eingangsspannungsänderungen usw., sind die zur optimalen Reglerstabilität erforderlichen Signale am zweiten Eingang des Pulsbreitenmodulators/-Frequenzmodulators verschieden.

Bei dem in Figur 3 der EP 0 355 333 B1 vorgestellten Schaltregler sind dies:

- ein sägezahnförmiges Signal $Q_{SK}$ konstanter Amplitude,
- ein zum Strom durch das Stellglied S1 proportionale Signal $RMI_L$,
- ein sägezahnförmiges Signal $Q_{SV}$, dessen Spitzenamplitude proportional zur auf integrierten Eingangsspannung des Schaltreglers gewählt ist.

Beim Ausführungsbeispiel gemäß Figur 2 der EP 0 355 333 B1 kommt noch ein Gleichspannungssignal $U_W$ hinzu, das proportional zur Höhe der Eingangsspannung des Schaltreglers gewählt ist.

Ein lastsprungabhängiges Signal kann bei der Erfindung auch durch eine andere Größe als dem Laststrom erhalten werden, z.B. durch die Erfassung von Spannungssprüngen im Schaltregler-Leistungskreis. Diese Größen können entsprechend verarbeitet werden und als Vorsteuersignal dem Pulsdauer- oder Pulsfrequenzmodulator zugeführt werden.

Beim Ausführungsbeispiel nach Figur 3 der Erfindung wird der Wechselanteil des Kollektorstroms eines Wanderfeldröhrenverstärkers erfaßt. Der Schaltregler wird hier als Vorregler für einen Gegentaktwandler GW eingesetzt. Im Ausgangskreis des Gegentaktwandlers GW befindet sich ein Hochspannungstransformator HT, der über die Hochspannungsgleichrichterschaltung HG die Versorgungsspannungen für die Wanderfeldröhre WF liefert. In der Kollektorzuleitung zum Kollektor K der Wanderfeldröhre WF befindet sich die Primärwicklung des Strommeßwandlers SW1 der Auswerteschaltung A zur Auswertung des Kollektorstromes IC. Die Sekundärwicklung ist wie in Figur 2 gezeigt beschaltet. Der Ausgang der Auswerteschaltung A führt, wie in Figur 1 gezeigt, über den Widerstand RF1 zur Einkoppeleinrichtung E. Bei Wanderfeldröhren mit zwei Kollektoren genügt, wie in Figur 3 dargestellt, normalerweise die Auswertung eines Kollektorstromes insbesondere jenes Kollektors der in unmittelbarer Nachbarschaft des Wehneltzylinder gelegen ist.

**Patentansprüche**

1. Schaltregler in dessen Regelkreis ein Fehlersignalverstärker (KO) vorgesehen ist, der im wesentlichen P-Verhalten aufweist und der auf einen Pulsdauer- oder Pulsfrequenzmodulator (PBM) für das Schaltreglerstellglied (31) einwirkt mit folgenden Merkmalen:

   - es ist eine Auswerteschaltung (A) zur Erfassung des Lastverhaltens des Schaltreglers vorgesehen,
   - zwischen dem Fehlersignalverstärker (KO) und dem Pulsdauer- oder Pulsfrequenzmodulator (PBM) ist eine Einkoppeleinrichtung (E) für das von der Auswerteschaltung (A) erfaßte Signal vorgesehen,
   - die Auswerteschaltung (A) ist so ausgestaltet, dass nur der Wechselanteil eines lastsprungabhängigen Signals ($I_L$) des Schaltreglers erfasst wird und die Zeitkonstante der Auswerteschaltung (A) so gewählt ist, dass der Fehlersignalverstärker (KO) die abklingende Regelabweichung des von der Auswerteschaltung (A) erfassten und als Vorsteuersignal für den Pulsdauer- oder Pulsfrequenzmodulator (PBM) vorgesehenen Signals ausgleichen kann.

2. Schaltregler nach Anspruch 1, **dadurch gekennzeichnet, daß** die Einkoppeleinrichtung (E) am Eingang des Pulsdauer- oder Pulsfrequenzmodulators (PBM) aus einer Addierschaltung oder einem Addierknoten besteht, wo das Ausgangssignal des Fehlersignalverstärkers (KO) mit dem von der Auswerteschaltung (A) erfaßten Signal verknüpft wird.

3. Schaltregler nach Anspruch 1 oder 2, **dadurch gekennzeichnet, daß** die Amplitude des Ausgangssignals des Fehlersignalverstarkers (KO), bzw. die Verstarkung des Fehlersignalverstärkers in dem Maße gegenuber einem Schaltregler ohne Einkoppeleinrichtung verändert wird, wie es der von der Auswerteschaltung (A) erfaßten lastsprungabhängigen Größe entspricht.

4. Schaltregler nach einem der Ansprüche 1 bis 3, **dadurch gekennzeichnet, daß** das von der Auswerteschaltung (A) erfaßte Signal der Wechselanteil des Laststromes ($IL$) des Schaltreglers ist.

5. Schaltregler nach einem der Ansprüche 2 bis 4, **dadurch gekennzeichnet, daß** die der Addierschaltung (E) bzw. dem Addierknoten zugeführten Signale über gleich große Widerstände (RF1, RF2) geleitet sind.

6. Schaltregler nach einem der Ansprüche 1 bis 5, **dadurch gekennzeichnet, daß** die Auswerteschaltung (A) aus einem Strommeßwandler (SW) mit nachgeschaltetem Verstärker (V) besteht.

7. Schaltregler nach einem der Ansprüche 1 bis 6, **dadurch gekennzeichnet, daß** dem Pulsdauer- oder Pulsfrequenzmodulator (PBM) einerseits das Ausgangssignal des Fehlerverstärkers (KO) mitsamt überlagertem Ausgangssignal der Auswerteschaltung (A) zugefuhrt und andererseits die Kombination aus mindestens zwei der folgenden Signale:

   - einem sägezahnförmigen Signal ($Q_{SK}$) konstanter Amplitude,
   - einem zum Strom durch das Stellglied (S1) proportionalem Signal ($RM \cdot I_L$),
   - einem sägezahnförmigen Signal ($Q_{SV}$), dessen Spitzenamplitude proportional zur aufintegrierten Eingangsspannung des Schaltreglers gewählt ist,
   - einem Gleichspannungssignal ($U_W$), das proportional zur Hohe der Eingangsspannung des Schaltreglers gewahlt ist.

8. Schaltregler nach einem der Ansprüche 1 bis 7, **dadurch gekennzeichnet, daß** über die Auswerteschaltung (A) der Kollektorstrom (IC) einer Wanderfeldrohre (WF) erfaßt wird.

## Claims

1. Switched-mode regulator in whose control loop an error signal amplifier (KO) is provided, which essentially has a P-response and which acts on a pulse-duration or pulse-frequency modulator (PBM) for the switched-mode regulator control element (S1), having the following features:

   - an evaluation circuit (A) is provided for detecting the load response of the switched-mode regulator,
   - a coupling device (E) for the signal detected by the evaluation circuit (A) is provided between the error signal amplifier (KO) and the pulse-duration or pulse-frequency modulator (PBM),
   - the evaluation circuit (A) is designed such that only the alternating component of a signal ($I_L$) from the switched-mode regulator and which is dependent on sudden load change is detected, and the time constant of the evaluation circuit (A) is chosen such that the error signal amplifier (KO) can compensate for the decaying control error of the signal which is detected by the evaluation circuit (A) and is provided as a pilot control signal for the pulse-duration or pulse-frequency modulator (PBM).

2. Switched-mode regulator according to Claim 1, **characterized in that** the coupling device (E) at the input of the pulse-duration or pulse-frequency modulator (PBM) comprises an adder circuit or an adder node, where the output signal from the error signal amplifier (KO) is linked to the signal which is detected by the evaluation circuit (A).

3. Switched-mode regulator according to Claim 1 or 2, **characterized in that** the amplitude of the output signal from the error signal amplifier (KO) and/or the gain of the error signal amplifier are/is varied with respect to those or that of a switched-mode regulator without an input device in such a way that it corresponds to the variable which is detected by the evaluation circuit (A) and is dependent on a sudden load change.

4. Switched-mode regulator according to one of Claims 1 to 3, **characterized in that** the signal which is detected by the evaluation circuit (A) is the alternating component of the load current (IL) of the switched-mode regulator.

5. Switched-mode regulator according to one of Claims 2 to 4, **characterized in that** the signals which are supplied to the adder circuit (E) and/or to the adder node are passed via resistors (RF1, RF2) of equal magnitude.

6. Switched-mode regulator according to one of Claims 1 to 5, **characterized in that** the evaluation circuit (A) comprises a current measurement transformer (SW) with a downstream amplifier (V).

7. Switched-mode regulator according to one of Claims 1 to 6, **characterized in that** the pulse-duration or pulse-frequency modulator (PBM) is supplied firstly with the output signal from the error amplifier (KO) together with, and superimposed on it, the output signal from the evaluation circuit (A), and, secondly, with the combination of at least two of the following signals:

   - a sawtooth-waveform signal ($Q_{SK}$) of constant amplitude,
   - a signal ($RM \cdot I_L$) which is proportional to the current through the control element (S1),
   - a sawtooth-waveform signal ($Q_{SV}$) whose peak amplitude is chosen to be proportional to the integrated input voltage of the switched-mode regulator, and
   - a DC voltage signal ($U_W$) which is chosen to be proportional to the magnitude of the input voltage of the switched-mode regulator.

8. Switched-mode regulator according to one of Claims 1 to 7, **characterized in that** the collector current (IC) of a travelling wave tube (WF) is detected via the evaluation circuit (A).


## Revendications

1. Régulateur de commutation dont le circuit de régulation comporte un amplificateur de signal d'erreur (KO) ayant principalement un comportement P proportionnel et agissant sur un modulateur de durée d'impulsions ou de fréquence d'impulsions (PBM) pour l'actionneur (S1) du régulateur de commutation,
   **caractérisé par**

   - un circuit d'exploitation (A) pour saisir le comportement en charge du régulateur de commutation,
   - une installation de couplage (E) pour le signal saisi par le circuit d'exploitation (A), entre l'amplificateur de signal d'erreur (KO) et le modulateur de durée d'impulsions ou de fréquence d'impulsions (PBM),
   - le circuit d'exploitation (A) étant conçu pour que seulement la composante alternative d'un signal ($I_L$) dépendant du saut de charge du régulateur de commutation soit saisie, et la constante de temps des circuits d'exploitation (A) étant choisie pour que l'amplificateur du signal d'erreur (KO) puisse compenser la déviation de régulation en atténuation du signal saisi par le circuit d'exploitation (A) et prévu comme signal de commande anticipé pour le modulateur de durée d'impulsions ou de fréquence d'impulsions (PBM).

2. Régulateur de commutation selon la revendication 1,
   **caractérisé en ce que**
   l'installation de couplage (E) à l'entrée du modulateur de durée d'impulsions ou de fréquence d'impulsions (PBM) est formée d'un circuit additionneur ou d'un noeud additionneur, qui combine le signal de sortie de l'amplificateur de signal d'erreur (KO) au signal saisi par le circuit d'exploitation (A).

3. Régulateur de commutation selon la revendication 1 ou 2,
   **caractérisé en ce qu'**
   on modifie l'amplitude du signal de sortie de l'amplificateur de signal d'erreur (KO) ou l'amplification de l'amplificateur de signal d'erreur par rapport à un régulateur de commutation sans installation de couplage d'entrée, d'une façon qui correspond à la grandeur dépendant du saut de charge saisi par le circuit d'exploitation (A).

4. Régulateur de commutation selon l'une quelconque des revendications 1 à 3,
   **caractérisé en ce que**
   le signal saisi par le circuit d'exploitation (A) est la composante alternative du courant de charge (IL) du régulateur de commutation.

5. Régulateur de commutation selon l'une quelconque des revendications 2 à 4,
   **caractérisé en ce que**
   les signaux fournis au circuit d'addition (E) ou au noeud d'addition sont transmis par des résistances de même valeur (RF1, RF2).

6. Régulateur de commutation selon l'une quelconque des revendications 1 à 5,
   **caractérisé en ce que**
   le circuit d'exploitation (A) est formé d'un transformateur de mesure d'intensité (SW) suivi dira amplificateur (V).

7. Régulateur de commutation selon l'une quelconque des revendications 1 à 7,
   **caractérisé en ce que**
   le modulateur de durée d'impulsions ou de fréquence d'impulsions (PBM) reçoit d'une part le signal de sortie de l'amplificateur d'erreur (KO) avec le signal de sortie combiné au circuit d'exploitation (A), et d'autre part la combinaison formée d'au moins deux des signaux suivants :

- un signal en dents de scie ($Q_{SK}$) d'amplitude constante,
- un signal ($RM.I_L$) proportionnel à l'intensité dans l'actionneur (S1),
- un signal en dents de scie ($Q_{SV}$) dont l'amplitude maximale est choisie proportionnelle à l'intégrale de la tension d'entrée du régulateur de commutation,
- un signal de tension continue (Uw) proportionnel à l'amplitude de la tension d'entrée du régulateur de commutation.

8. Régulateur de commutation selon l'une quelconque des revendications 1 à 7,
   **caractérisé en ce qu'**
   on saisit le courant de collecteur (IC) d'un tube à ondes progressives (WF) par le circuit d'exploitation (A).

Fig. 1

Fig. 2

Fig. 3